# EUROPEAN PATENT SPECIFICATION

(11) **EP 4 696 864 B1**
(45) Date of publication and mention of the grant of the patent: **09.12.2026**
(21) Application number: 25196148.8
(22) Date of filing: 15.08.2025
(51) Int. Cl.: E21B 44/00, E21B 47/00, E21B 47/02, G01V 3/38

(54) **ACTIVE RESISTIVITY RANGING WHILE DRILLING AN OPERATIONAL WELL FOR SIMULTANEOUS DETECTION OF MULTIPLE TARGET WELLS**
AKTIVE WIDERSTANDSMESSUNG BEIM BOHREN EINES BETRIEBSBOHRLOCHS ZUR GLEICHZEITIGEN ERKENNUNG MEHRERER ZIELBOHRLÖCHER
MESURE DE RÉSISTIVITÉ ACTIVE PENDANT LE FORAGE D'UN PUITS OPÉRATIONNEL POUR LA DÉTECTION SIMULTANÉE DE MULTIPLES PUITS CIBLES

(30) Priority: 16.08.2024 US 202463683840 P
(43) Date of publication of application: 18.02.2026
(73) Proprietor: Services Pétroliers Schlumberger, 75007 Paris (FR); Schlumberger Technology B.V., 2514 JG The Hague (NL)
(72) Inventor: LOWDON, Ross, Stonehouse, GL10 3SX (GB); LIANG, Lin, Cambridge, MA 02139 (US); SALIM, Diogo, Sugar Land, TX 77478 (US); CHEN, Yong-Hua, Cambridge, MA 02139 (US)
(74) Representative: Schlumberger Intellectual Property Department

(56) References cited:
- CN-A- 110 593 852
- US-A1- 20240 263 517
- SINHA SUPRIYA ET AL: "Past, Present, and Future Applications of Ultradeep Directional Resistivity Measurements: A Case History From the Norwegian Continental Shelf", PETROPHYSICS - THE SPWLA JOURNAL OF FORMATION EVALUATION AND RESERVOIR DESCRIPTION, vol. 63, no. 6, 1 December 2022 (2022-12-01), pages 604 - 633, XP093248619, ISSN: 2641-4112, DOI: 10.30632/PJV63N6-2022a3

## Description

### CROSS-REFERENCE TO RELATED APPLICATION(S)

The present disclosure claims priority from U.S. Provisional Patent Application No. 63/683840, filed August 16, 2024.

### FIELD

The present disclosure relates to active resistivity ranging while-drilling by means of the LWD electromagnetic measurements acquired from an azimuthal resistivity tool.

### BACKGROUND

US Patent No. 10,267,945 to Omeragic describes the use of transverse antenna measurements for casing and pipe detection. The method covered by this patent is based on a parametric interpretation approach, which can be applied to a single target well or casing that extends parallel or near-parallel to the new well being drilled. In this approach, the distance of the single target well to the new well being drilled is interpolated from a prebuilt table utilizing the measured harmonic anisotropy attenuation (UHAA) measurements acquired downhole while-drilling, while the azimuthal orientation of the single target well relative to the new well being drilled is obtained from the second harmonic angle (ANSH) measurement.

The paper by Thiel, Michael & Wang, Haifeng & Chen, Yong-Hua & Zaslavsky, Mikhail & Liang, Lin & Denichou, Jean-Michel & Hoeyland, Henning & Gallager, Brian & Phong, Nguyen. (2022). Precise Localization of Offset Wells Crossed With Deep Directional Resistivity Measurements. 10.30632/SPWLA-2022-0051, describes an imaging-based approach (i.e., pixel-based inversion) that can detect a single target well when the single target well is crossed by the new well being drilled under the situation of a high inclination of the borehole, or when the target well is closely ahead of the drilling bit and near perpendicular to the new well being drilled. The paper by Sinha Supriya et al "Past, Present and Future Applications of Ultradeep Directional Resistivity Measurements: A Case History form the Norwegian Continental Shelf". 10.30632/ PJV63N6-2022a3, describes use of the UDAR tool in the forward modelling of horizontal wells. The use of parameterization in the inverse processing of the data is not covered in this document.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter. The scope of protection is defined in the appended claims.

In embodiments, methods are provided that detect and locate multiple target wells that extend through a subterranean formation in a region surrounding a new well being drilled. The methods deploy a downhole tool in the new well being drilled while drilling the new well and configure the downhole tool to acquire azimuthal resistivity measurements while drilling the new well. The azimuthal resistivity measurements are processed to detect and locate multiple target wells that extend through the subterranean formation in the region surrounding the new well.

In embodiments, the azimuthal resistivity tool can be an ultradeep azimuthal resistivity tool configured to detect resistivity changes at a depth of investigation relative to the new well of over 30.5 metres (100 feet) in magnitude.

In embodiments, the locations of the multiple target wells can be used in geosteering operations that dynamically adjust the direction of drilling while drilling the new well.

In embodiments, the multiple target wells can be cased or open holes (wells) that have conductivity contrast with surrounding formation.

In embodiments, the new well and the multiple target wells can be spatially aligned in different relative angles, including all parallel or nearly parallel, partially parallel, or all in arbitrary directions.

In embodiments, the multiple target wells can extend through the formation near the new well, or the multiple target wells can extend through the formation and come close to the new well simultaneously with one another, or the multiple target wells can extend through the formation and come close to the new well one after another.

In embodiments, the processing can be configured to detect and locate the multiple target wells in cases where the number of target wells in the region surrounding the new well is unknown. Additionally or alternatively, the processing can be configured to detect and locate the multiple target wells in cases where the number of target wells in the region surrounding the new well is known.

In embodiments, the processing can be configured to determine distance and orientation or bearing of the new well relative to each one of the multiple target wells.

In embodiments, the processing can involve an inversion process that generates synthesized tool response data from a formation model and refines the formation model based on evaluation of differences between the synthesized tool response data and measured tool response data.

In embodiments, the inversion process can be a pixel-based inversion process where the number of target wells in the region surrounding the new well is unknown.

In embodiments, the inversion process can be a model-based inversion process where the number of target wells in the region surrounding the new well is known information.

In embodiments, each target well can be modeled by parameters such as positional coordinates of the central point of the target well, dip and azimuth angle of the target well, and conductivity (i.e., casing or fluid in the open hole) and diameter of the target well.

In embodiments, the processing involves sequential parametric interpretation.

In embodiments, the sequential parametric interpretation is configured to extrapolate a detected target well deeper into the formation and combine the extrapolated part of the detected target well with a background formation model for input to a forward modeling process to generate the simulated tool response data for the downhole tool, and process the simulated tool response data with measured response data of the downhole tool to detect location and orientation of a next target well.

In embodiments, the processing can employ a machine-learning model.

In embodiments, the machine-learning model can be a machine-learning proxy model trained to represent three-dimensional forward modeling of simulated tool response data of an azimuthal resistivity tool from properties of a model that represents resistivity of the formation and multiple target wells in the region surrounding the new well being drilled.

In embodiments, the machine-learning model can be trained to map the azimuthal resistivity measurements of an azimuthal resistivity tool to an image of resistivity distribution in the region surrounding the new well being drilled.

In embodiments, the machine-learning model can be trained to map the azimuthal resistivity measurements of an azimuthal resistivity tool to a parametric description of multiple target wells in the region surrounding the new well being drilled.

In embodiments, the processing can be performed by a processor.

Additional features and advantages of embodiments of the disclosure will be set forth in the description which follows, and in part will be obvious from the description, or may be learned by the practice of such embodiments. The features and advantages of such embodiments may be realized and obtained by means of the instruments and combinations particularly pointed out in the appended claims. These and other features will become more fully apparent from the following description and appended claims or may be learned by the practice of such embodiments as set forth hereinafter.

### BRIEF DESCRIPTION OF THE DRAWINGS

In order to describe the manner in which the above-recited and other features of the disclosure can be obtained, a more particular description will be rendered by reference to specific implementations thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example implementations, the implementations will be described and explained with additional specificity and detail through the use of the accompanying drawings in which:

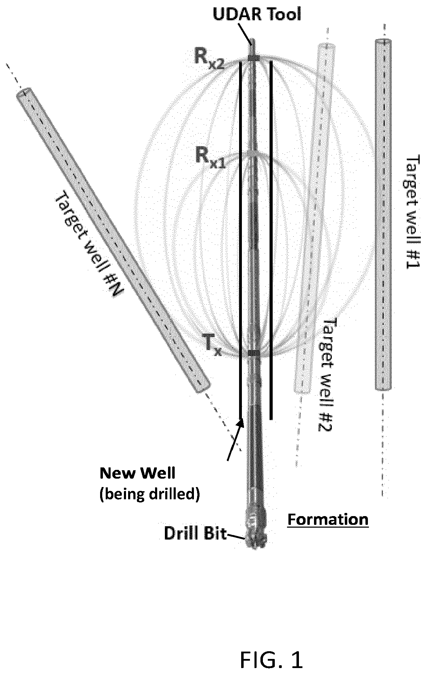

Figure 1 is a schematic diagram that depicts a new well being drilled through a subterranean formation with multiple target wells extending through the formation in a region surrounding the new well and an ultradeep azimuthal resistivity (UDAR) tool deployed in the new well while drilling the new well for data acquisition. In Figure 1, three target wells extend through the formation in the region surrounding the new well and come close to the new well simultaneously with one another and become detectable by the UDAR tool simultaneously with one another;

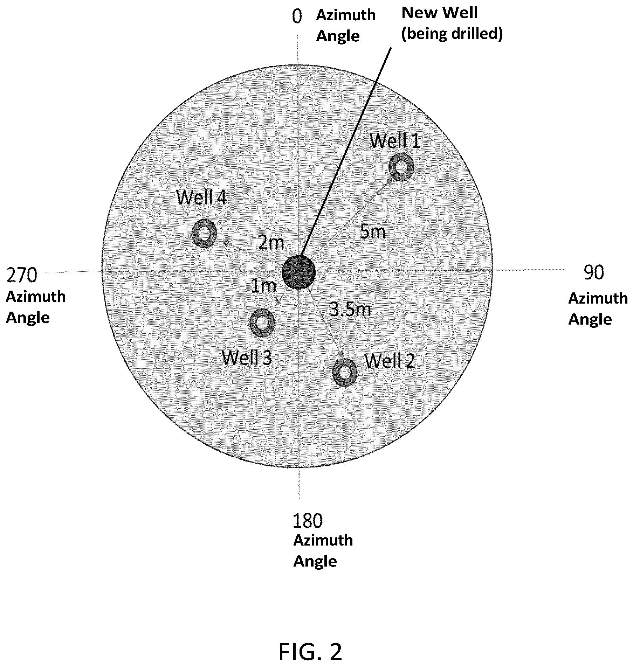

Figure 2 is a diagram that depicts the layout of a new well being drilled through a subterranean formation with four target wells (labeled 1, 2, 3, 4) extending through the formation in the region surrounding the new well being drilled. The directions of the four target wells relative to the central axis of the new well are shown as arrows in a two-dimensional coordinate system of azimuth angle with the central axis of the new well located at the origin of the two-dimensional coordinate system. A UDAR tool can be deployed in the new well while drilling the new well for data acquisition;

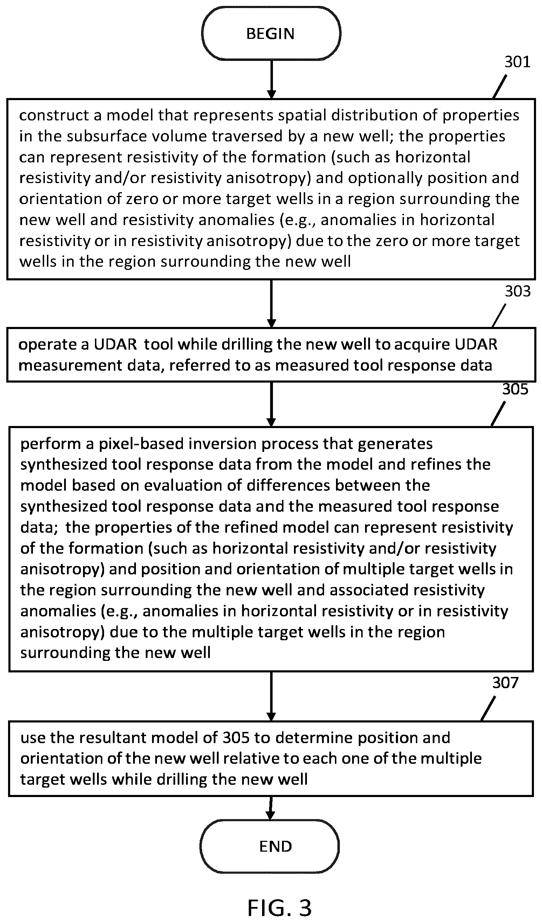

Figure 3 is a flowchart that describes a workflow that employs an inversion process involving ultradeep azimuthal resistivity (UDAR) measurements while drilling a new well to detect and locate multiple target wells in a region surrounding the new well;

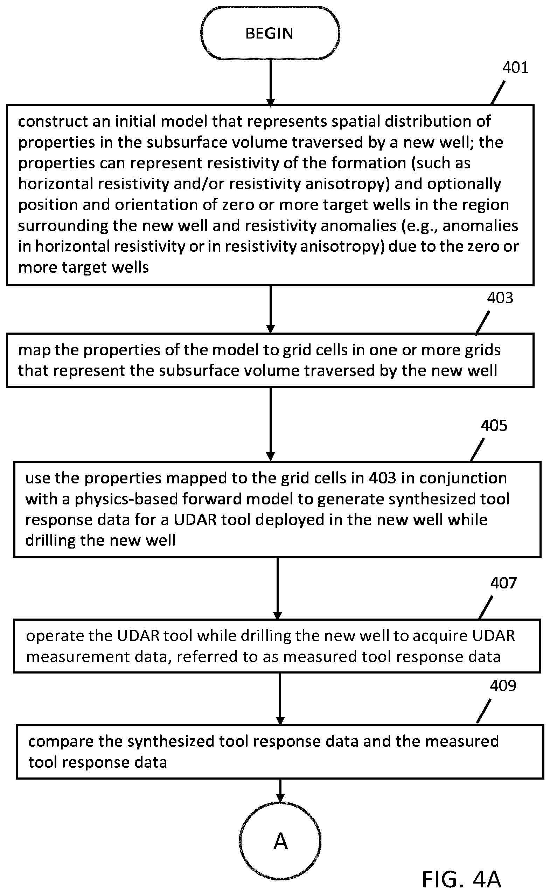

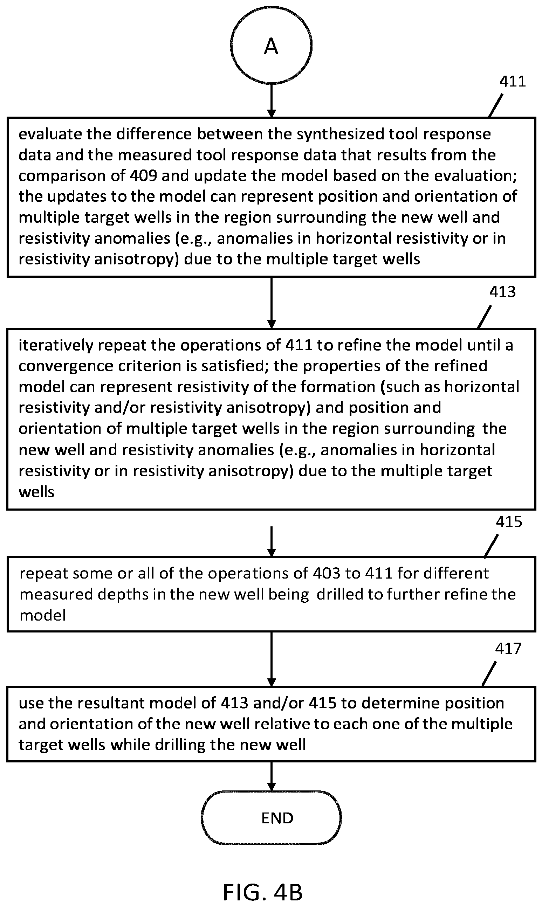

Figures 4A and 4B, collectively, is a flowchart that describes another workflow that employs an inversion process involving ultradeep azimuthal resistivity (UDAR) measurements while drilling a new well to detect and locate multiple target wells in a region surrounding the new well;

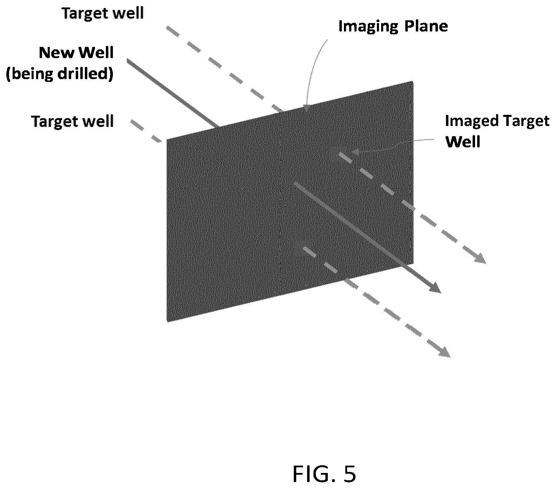

Figure 5 is a schematic figure that illustrates a resistivity image or a resistivity anisotropy image resulting from a two-dimensional (2D) pixel-based inversion process involving ultradeep azimuthal resistivity (UDAR) measurements while drilling a new well to detect and locate multiple target wells in a region surrounding the new well in parallel with the drilling;

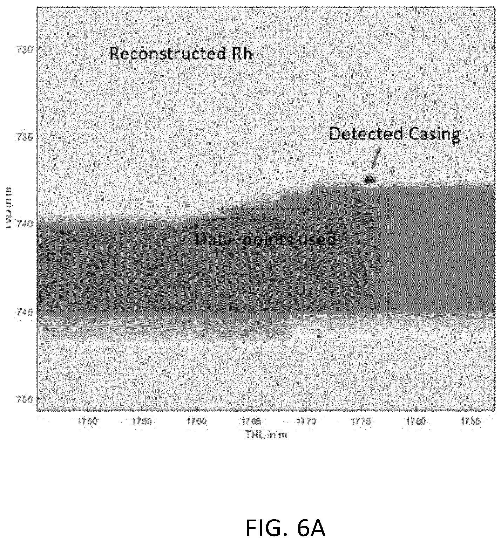

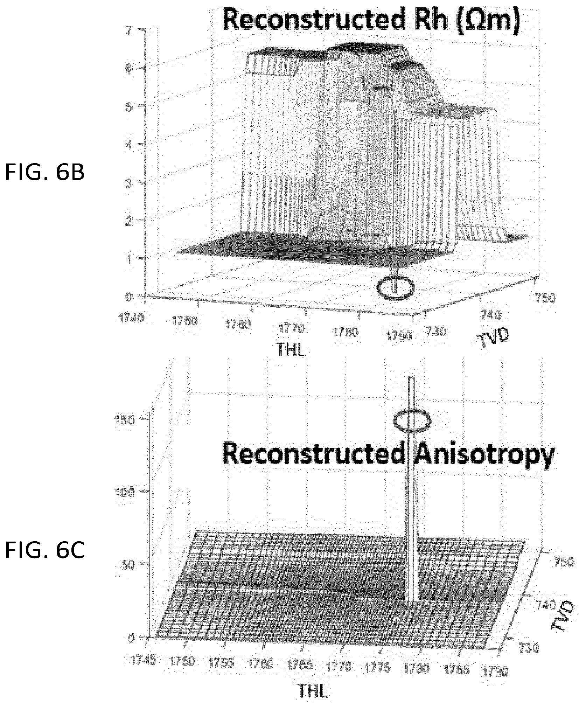

Figures 6A to 6C are figures that represent results of a two-dimensional (2D) pixel-based inversion process where the formation and the target well (in this case, a cased well) is described with an example 2D model that represents resistivity (including both horizontal resistivity and resistivity anisotropy) in the TVD and THL directions. Figure 6A depicts the results of a look ahead inversion process using only R1 (F3-F6). Figure 6B illustrates the refinement or reconstruction of horizontal resistivity that results from the inversion process. Figure 6C illustrates the refinement or reconstruction of resistivity anisotropy that results from the inversion process. In this case, the target well is perpendicular to the new well being drilled;

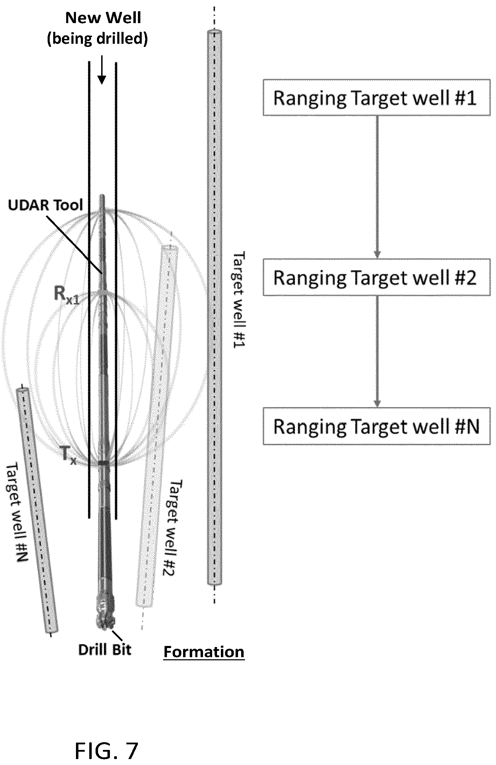

Figure 7 is a schematic diagram that depicts a new well being drilled through a subterranean formation with multiple target wells extending through the formation in a region surrounding the new well and a UDAR tool deployed in the new well while drilling the new well for data acquisition. In Figure 7, the multiple target wells extend through the formation in the region surrounding the new well and come close to the new well and become detectable by the UDAR tool one after another in a sequential manner.

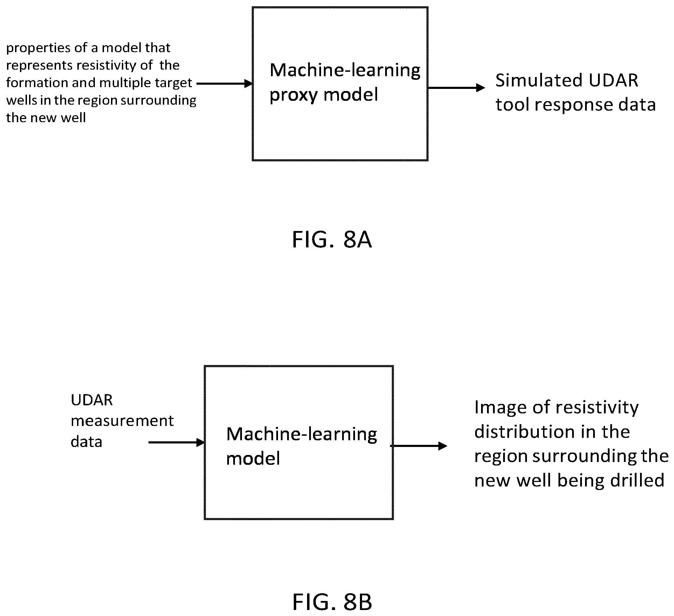

Figure 8A is a schematic diagram of a machine-learning proxy model trained to represent the three-dimensional forward modeling of simulated tool response data of a UDAR tool from the properties of a model that represents resistivity of the formation and multiple target wells in the region surrounding the new well being drilled;
Figure 8B is a schematic diagram of a machine-learning model trained to map UDAR measurement data to an image of resistivity profile in the region surrounding the new well being drilled;

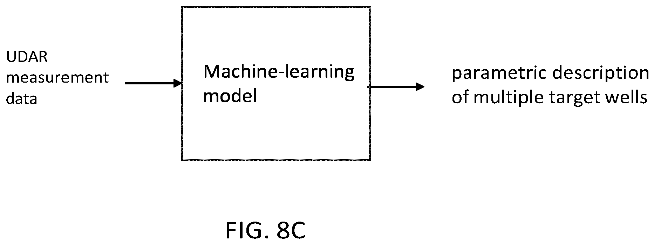

Figure 8C is a schematic diagram of a machine-learning model trained to map UDAR measurement data to a parametric description of multiple target wells in the region surrounding the new well being drilled; and

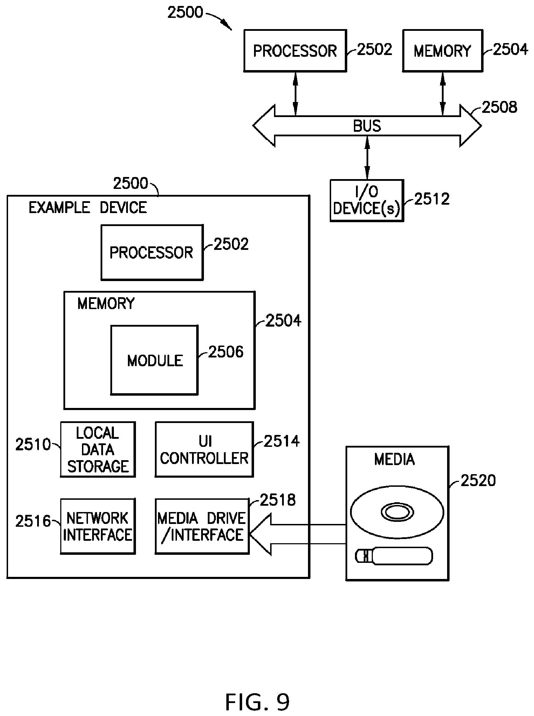

Figure 9 is a schematic diagram of an example computing device.

### DETAILED DESCRIPTION

The particulars shown herein are by way of example and for purposes of illustrative discussion of the embodiments of the subject disclosure only and are presented in the cause of providing what is believed to be the most useful and readily understood description of the principles and conceptual aspects of the subject disclosure. In this regard, no attempt is made to show structural details in more detail than is necessary for the fundamental understanding of the subject disclosure, the description taken with the drawings making apparent to those skilled in the art how the several forms of the subject disclosure may be embodied in practice. Furthermore, like reference numbers and designations in the various drawings indicate like elements.

The present disclosure describes a workflow that employs ultradeep azimuthal resistivity (UDAR) measurements performed by a UDAR tool while drilling a new well to detect and locate multiple target wells in the region surrounding the new well. The multiple target wells can be cased or open hole wells that have high conductivity contrast with the surrounding formation. The multiple target wells can extend through the formation that surrounds the new well being drilled and the UDAR tool is deployed in the new well while drilling the new well for data acquisition as shown in Figure 1. The new well and the multiple target wells can be spatially aligned in different relative angles, including all parallel or nearly parallel, partially parallel, or all in arbitrary directions. The multiple target wells can extend through the formation in the region surrounding the new well and come close to the new well simultaneously with one another (e.g., Figure 1), or come close to the new well one after another (e.g., Figure 7). The workflow can detect and locate the multiple target wells in cases where the number of target wells is known or unknown. Depending on the scenario, multiple solutions are described to detect and locate the multiple target wells. As used herein, a target well is "nearby" a new well being drilled when the target well is offset from the new well at a distance less than the depth of investigation of the UDAR tool as deployed in the new well. The depth of investigation represents a distance that characterizes how far the UDAR measurements extend into the formation from the face of the UDAR tool or the wellbore wall. The azimuthal resistivity measurements are focused in directions perpendicular to the surface of the UDAR tool from which it receives most of its signal. Thus, in one illustrative example where the UDAR tool is configured to measure resistivity in directions perpendicular to the surface of the UDAR tool with a depth of investigation relative to the new well of 30.5 metres (100 feet) in magnitude, and the nearby target wells can be offset from the new well in such directions at a distance of up to 30.5 metres (100 feet).

Figure 1 depicts an illustrative scenario of an active resistivity ranging workflow that detects and locates multiple target wells in the region surrounding a new well while drilling the new well by means of ultradeep azimuthal resistivity measurements of a UDAR tool. The UDAR tool can employ multi-spacing, multi-component and multi-frequency induction measurements that characterize formation resistivities around and/or ahead of the drill bit while drilling the new well. Such ultradeep azimuthal resistivity measurements can be used for geosteering operations that dynamically adjust the direction of drilling while drilling the new well. The UDAR tool can employ tilted or transverse antennas that add azimuthal sensitivity to the induction measurements. With longer spacing between transmitter and receiver, and lower frequency down to 1 kHz, the UDAR tool can measure resistivity in directions perpendicular to the outer surface of the UDAR tool with a depth of investigation relative to the new well of over 30.5 metres (100 feet) in magnitude. In Figure 1, three target wells extend through the formation in the region surrounding the new well being drilled and come close to the new well simultaneously with one another.

Figure 2 depicts the relative layout of four target wells relative to a new offset well being drilled. The ultradeep azimuthal resistivity (UDAR) measurements of the UDAR tool, which is positioned in the new well being drilled (at the origin of the two-dimensional coordinate system of the diagram) can be processed to determine the distance and orientation or bearing (in azimuth angle) of the new well relative to each of these target wells.

Figure 3 describes a workflow that employs an inversion process involving UDAR measurements while drilling a new well to detect and locate multiple target wells in a region surrounding the new well. The multiple target wells can be cased or open hole wells that have high conductivity contrast with the surrounding formation. For example, in one illustrative embodiment, the conductivity of the formation can be in the range of 0.25 to 100 mS/m depending on lithology and fluid types, while the conductivity of the one or more target wells that have a steel casing can be approximately 621000 mS/m and the conductivity of one or more target wells that have an open hole completion filled with salt water can be in the range of 10000 - 80000 mS/m depending on salinity and temperature. In other embodiments, the conductivity of the formation as well as the conductivity of target wells can vary from these values. The multiple target wells extend through the formation in the region that surrounds the new well being drilled, and the UDAR tool is deployed in the new well while drilling the new well for data acquisition.

In 301, a model that represents spatial distribution of properties in the subsurface volume traversed by the new well is constructed. The properties can represent resistivity of the formation (such as horizontal resistivity and/or resistivity anisotropy) and optionally position and orientation of zero or more target wells in a region surrounding the new well and resistivity anomalies (e.g., anomalies in horizontal resistivity or in resistivity anisotropy) due to the zero or more target wells in the region surrounding the new well. The model can include a two-dimensional (2D) resistivity model that represents resistivity properties of formation and the zero or more target wells in the region surrounding the new well or three-dimensional (3D) resistivity model that represents resistivity properties of formation and the zero or more target wells in the region surrounding the new well.

In 303, a UDAR tool is operated while drilling the new well to acquire UDAR measurement data, referred to as measured tool response data.

In 305, a pixel-based inversion process is performed that generates synthesized tool response data from the model of 301 and refines the model of 301 based on evaluation of differences between the synthesized tool response data and the measured tool response data. The properties of the refined model can represent resistivity of the formation (such as horizontal resistivity and/or resistivity anisotropy) and position and orientation of multiple target wells in the region surrounding the new well and associated resistivity anomalies (e.g., anomalies in horizontal resistivity or in resistivity anisotropy) due to the multiple target wells in the region surrounding the new well.

In 307, the resultant model of 305 can be used to determine position and orientation of the new well relative to each one of the multiple target wells while drilling the new well.

The position and orientation of the new well relative to each one of the multiple target wells as determined in 307 can be used in geosteering operations that dynamically adjust the direction of drilling while drilling the new well. For example, some fields have existing wells drilled and completed or even abandoned in the past. When a new operational well is drilled in such a field, the geosteering operations can be configured to navigate the path of new well being drilled away from the existing wells to avoid damage to the drilling operation. In another example, in some geothermal projects, it can be desired to drill multiple wells with designed pattern or offset. In this example, the geosteering operations can be configured to navigate the path of new well being drilled based on locations of other wells in order to form the designed pattern or offset.

Figure 4A and 4B describes another workflow that employs a model-based inversion process involving UDAR measurements while drilling a new well to detect and locate multiple target wells in a region surrounding the new well. The multiple target wells can be cased or open hole wells that have high conductivity contrast with the surrounding formation. The multiple target wells extend through the formation in a region that surrounds the new well being drilled and the UDAR tool is deployed in the new well while drilling the new well for data acquisition.

In 401, an initial model that represents spatial distribution of properties in the subsurface volume traversed by a new well is constructed. The properties can represent resistivity of the formation (such as horizontal resistivity and/or resistivity anisotropy) and optionally position and orientation of zero or more target wells in the region surrounding the new well and resistivity anomalies (e.g., anomalies in horizontal resistivity or in resistivity anisotropy) due to the zero or more target wells. The model can include a two-dimensional (2D) resistivity model that represents resistivity properties of formation and the zero or more target wells in the region surrounding the new well or a three-dimensional (3D) resistivity model that represents resistivity properties of formation and the zero or more target wells in the region surrounding the new well.

In embodiments, the initial model can be constructed based on resistivity logs acquired while drilling the new well (operation well), or the resistivity logs obtained from the target wells or other offset wells. Additionally, the resistivity of metallic casing can be modelled based on a well survey. In this case, the diameter size can be used to model the metallic casing as a perfect electric conductor. Alternatively, in an open-hole scenario, there is no metallic casing but the resistivity of fluid contained in the borehole can be modeled from dissolved salinity and the downhole temperature of the borehole fluid.

In 403, the properties of the model 401 are mapped to grid cells in one or more grids that represent the subsurface volume traversed by the new well.

In 405, the properties mapped to the grid cells in 403 are used in conjunction with a physics-based forward model to generate synthesized tool response data for the UDAR tool deployed in the new well while drilling the new well. The physics-based forward model can use at least one of a number of conventional numerical schemes, such as finite difference method (FDM), finite element method (FEM), method of integral equations (IE), or other methods specifically designed for this application.

In 407, the UDAR tool is operated while drilling the new well to acquire UDAR measurement data, referred to as measured tool response data.

In 409, the synthesized tool response data of 405 is compared to the measured tool response data of 407.

In 411, the difference between the synthesized tool response data and the measured tool response data that results from the comparison of 409 is evaluated, and the model is updated based on the evaluation. The updates to the model can represent position and orientation of multiple target wells in the region surrounding the new well and resistivity anomalies (e.g., anomalies in horizontal resistivity or in resistivity anisotropy) due to the multiple target wells.

In block 413, the operations of 411 can be iteratively repeated to refine the model until a convergence criterion is satisfied. The properties of the refined model can represent resistivity of the formation (such as horizontal resistivity and/or resistivity anisotropy) and position and orientation of multiple target wells in the region surrounding the new well and resistivity anomalies (e.g., anomalies in horizontal resistivity or in resistivity anisotropy) due to the multiple target wells.

In 415, some or all of the operations of 403 to 411 can be iteratively repeated for different measured depths in the new well being drilled to further refine the model to better match the measured tool response.

In 417, the resultant model of 413 and/or 415 can be used to determine position and orientation of the new well relative to each one of the multiple target wells while drilling the new well.

The position and orientation of the multiple target wells as determined in 417 can be used in geosteering operations that dynamically adjust the direction of drilling while drilling the new well.

In embodiments, the workflow that employs UDAR measurements while drilling a new well to detect and locate multiple target wells in a region surrounding the new well (such as the workflows of Figures 3 and 4A and 4B) can employ a pixel-based inversion process (Figure 3) or a model-based inversion process (Figure 4). For example, an unbiased pixel-based inversion algorithm can be used to image the resistivity anomalies that indicate the existence of multiple target wells in the region surrounding a new well being drilled as shown in Figures 5 and 6. In this approach, a model that represents resistivity of the formation and zero or more target wells in the region surrounding the new well being drilled is discretized into grid meshes, and the resistivities in each grid mesh are reconstructed by matching the simulated tool response data of a UDAR tool to the measured tool response data of the UDAR tool. The grid around the new well being drilled is configured to better approximate the presence of the multiple target wells. A 2D inversion methodology can be used for the case where the combination of formation and the multiple target wells are represented by a 2D resistivity model. More specifically, for this scenario, the multiple target wells (excluding the new well being drilled) can extend through the nearby formation in directions that are generally parallel to one another with the distribution of formation resistivity variant along the direction of multiple target wells. A 2.5D forward modeling method can be used to generate the simulated response data representing the electromagnetic measurements of the UDAR tool. For example, Abubakar A., Habashy T.M., Druskin V., Knizhnerman L., and Alumbaugh D., "2.5D forward and inverse modeling for interpreting low-frequency electromagnetic measurements", Geophysics, 2008, vol. 73 (4), pg. F165-F177, and Chen, Y.H., Omeragic, D., Druskin, V., Kuo, C.H., Habashy, T., Abubakar, A. and Knizhnerman, L., "2.5 D FD modeling of EM directional propagation tools in high-angle and horizontal wells," In SEG International Exposition and Annual Meeting, September, 2011, pp. SEG-2011, describe 2.5D forward and inverse modeling methods. A 2D deterministic inversion method (e.g., regularized Gauss-Newton method) can be used to reconstruct the resistivity distribution, where cells with low resistivity relative to surrounding formation indicate the presence of the target well(s) with casing or the target well(s) with fluid in an open hole completion. For example, Thiel, M. and Omeragic, D., "Full 3D reservoir mapping using deep directional resistivity measurements," In SPE Annual Technical Conference and Exhibition, October 2020, p. D041S058R008 describes an example 2D deterministic inversion method.

In the pixel-based inversion modeling process, the formation can be discretized into meshes, where each mesh is then populated with the formation horizontal resistivity and the vertical resistivity. However, the multiple target wells can be represented by effective abnormal resistivity values of the grid cells. Thus, there is no need to explicitly add position and orientation of the target wells into the model. Furthermore, the position and orientation (i.e., distance and azimuthal orientation relative to the new well being drilled) of the multiple target wells can be directly observed from the identified cells with lower resistivity relative to the surrounding subsurface formation.

Figures 6A to 6C present a field example for such a scenario. In this example, the formation and the target well (in this case, a cased well) is described with a 2D model that represents resistivity (including horizonal resistivity and resistivity anisotropy) in the TVD and THL directions. Figure 6A depicts the results of the look ahead inversion using only R1 (F3-F6). These results are generated from a pixel-based inversion described in the paper by Thiel, M., Wang, H., Chen, Y.H., Zaslavsky, M., Liang, L., Denichou, J.M., Hoeyland, H., Gallager, B. and Phong, N.X., entitled "Precise Localization of Offset Wells Crossed with Deep Directional Resistivity Measurements," SPWLA Annual Logging Symposium, June 2022 (p. D041S009R003), SPWLA. Figure 6B illustrates the refinement or reconstruction of horizontal resistivity that results from the inversion process. Figure 6C illustrates the refinement or reconstruction of resistivity anisotropy that results from the inversion process. The reconstructed resistivity map of Figure 6B reveals the existence of a cased target well located near the top of the resistive reservoir layer. As expected, the cased target well shows up as a highly conductive event. The inverted resistivity anisotropy of Figure 6C also reveals the location of the cased target well. Notice that the casing is located ahead of the measured resistivity data that were used in the inversion. The results suggest the look ahead capability of the techniques disclosed herewith.

For the case where the resistivity distribution (accounting for effects of both formation properties and multiple target wells) cannot be simplified by a 2.5D approximation, then a full 3D inversion can be carried out to map the resistivity anomalies derived from the multiple target wells. For example, Thiel, M. and Omeragic, D., "Full 3D reservoir mapping using deep directional resistivity measurements," In SPE Annual Technical Conference and Exhibition, October, 2020, p. D041S058R008 and Omar, S., Salim, D., Zaslavsky, M. and Liang, L., "High-Resolution 3D Reservoir Mapping and Geosteering Using Voxel-Based Inversion Processing of UDAR Measurements," In SPWLA Annual Logging Symposium, May 2024, p. D041S016R001, describe example 3D inversion methods. 3D forward modeling (such as described in Davydycheva, S., Druskin, V. and Habashy, T., "An efficient finite-difference scheme for electromagnetic logging in 3D anisotropic inhomogeneous media. Geophysics, 68(5), 2003, pp.1525-1536 and Zaslavsky, M., Druskin, V., Davydycheva, S., Knizhnerman, L., Abubakar, A. and Habashy, T., "Hybrid finite-difference integral equation solver for 3D frequency domain anisotropic electromagnetic problems", Geophysics, 76(2), 2011, pp.F123-F137) can be used for simulating the tool response data of the UDAR tool with full sensitivity in all spatial directions. From the reconstructed 3D resistivity distribution, cells with low resistivity relative to the surrounding formation indicate the presence of the target well(s) with casing or the target well(s) with fluid in an open hole completion. This pixel-based inversion solution is especially helpful when there is no prior information on the number of target wells that are within the depth of investigation of the UDAR tool.

In other embodiments, the workflow that employs UDAR measurements while drilling a new well to detect and locate multiple target wells in regions surrounding the new well (such as the workflows of Figures 3 and 4A and 4B) can employ a model-based inversion process. In this process, the number of target wells in the region surrounding the new well being drilled is known information. In this approach, each known target well is modeled by a few parameters, for example, but not limited to, positional coordinates of the central point of the target well, dip and azimuth angle of the target well, and conductivity (i.e., casing or fluid in the open hole) and diameter of the target well. In addition to the modelling representation of the known target wells, a 3D formation model can be constructed that incorporates properties of the formation surrounding the new well being drilled. For example, the formation properties can include horizontal resistivity, resistivity anisotropy, and the dip and azimuth of the anisotropy, which all impact in the measurement sensitivity of the UDAR tool. These parameters can be inverted (the conductivity of the wellbore can be an input parameter) by matching the simulated tool response data of the UDAR tool derived from the model to measured tool response data of the UDAR tool. The formation resistivities can be either defined from shallow resistivity measurements or inverted simultaneously. In this scenario, the simulated tool response data for the UDAR tool can be generated by a 3D forward modeling algorithm, such as described in Davydycheva, S., Druskin, V. and Habashy, T., "An efficient finite-difference scheme for electromagnetic logging in 3D anisotropic inhomogeneous media," Geophysics, 68(5), 2003, pp.1525-1536 and Zaslavsky, M., Druskin, V., Davydycheva, S., Knizhnerman, L., Abubakar, A. and Habashy, T., "Hybrid finite-difference integral equation solver for 3D frequency domain anisotropic electromagnetic problems," Geophysics, 76(2), 2011, pp.F123-F137. The model-based inversion (or called parametric inversion) can be, but not limited to, a Gauss-Newton method, as described in Abubakar, A., Habashy, T.M., Druskin, V., Davydycheva, S., Wang, H., Barber, T. and Knizhnerman, L., "A three-dimensional parametric inversion of multi-component multi-spacing induction logging data," In SEG Technical Program Expanded Abstracts, Society of Exploration Geophysicists, 2004, pp. 616-619.

In the model-based inversion method, the target wells can be mapped into the formation resistivity model based on their locations and specific resistivities defined by parameters (i.e., positional coordinates of the central point of the target well, dip and azimuth angle of the target well, and conductivity and diameter of the target well). This formation resistivity model is then used to run the forward modeling to generate the synthetic tool response data for the UDAR tool. The model-based inversion process is configured to iteratively tune these parameters until the synthetic tool response data derived from the model matches the measured tool response data for the UDAR tool. From the above model-based inversion process, once the synthetic tool response data matches the measured tool response data, the target wells can be located from the inverted parameters (i.e., positional coordinates of the central point of the target well, dip and azimuth angle of the target well).

In still other embodiments, the workflow that employs UDAR measurements while drilling a new well to detect and locate multiple target wells in the region surrounding the new well (such as the workflows of Figures 3 and 4A and 4B) can employ sequential parametric interpretation. This approach can be used for the case where the multiple target wells come close to the new well being drilled and become detectable by the UDAR tool one after another as in Figure 7. In this case, the workflow can perform a sequence of parametric interpretation-based ranging operations based on the teachings of US Patent No. 10,267,945. Specifically, the ranging operations based on the UHAA and ANSH measurements of the UDAR tool as described in US Patent No. 10,267,945 can be used to locate the first target well while it is the only well within the depth of investigation of the UDAR tool. Sequentially, considering that both the lateral distance and the relative angle between the first target well and the new well being drilled remain similar within the entire depth zone of the multiple-well ranging, the respective first target well can be extrapolated to extend the first confirmed target well location straight down to a deeper formation location and then regarded as part of the background formation model being used to solve for the location and azimuthal direction of the next target well as it enters the depth of investigation of the UDAR tool. More specifically, the workflow can simply remove the UHAA and ANSH responses due to the first confirmed target well from the measured data and solve for the next target well. In this process, the contribution of the confirmed target well as extrapolated to another downhole measurement station can be combined with the background formation model at the downhole measurement station, and the resultant resistivity model input to forward modeling process to generate the simulated tool response data for the UDAR tool. Such simulated tool response data can be subtracted from the measured UHAA and ANSH response data obtained by the UDAR tool at the downhole measurement station and the resultant differences in the tool response data can be processed as described in US Patent No. 10,267,945 to detect the location and orientation of next target well in the sequence.

In yet other embodiments, the workflow that employs UDAR measurements while drilling a new well to detect and locate multiple target wells in the region surrounding the new well can employ machine learning assisted interpretation. For example, one or more machine learning assisted methods can be configured to provide efficient solutions for simultaneous ranging of multiple target wells while-drilling. There are three strategies to leverage machine learning techniques. The first strategy is to train a machine-learning proxy model to represent the three-dimensional forward modeling of simulated tool response data for a UDAR tool from the properties of a model that represents resistivity of the formation and multiple target wells in the region surrounding the new well being drilled as shown in Figure 8A. The machine-learning proxy model can be used as part of the pixel-based resistivity inversion process or model-based resistivity inversion process described above. The training data set used for training the machine-learning model can be synthesized using a physics-based simulator. The machine-learning proxy model of Figure 8A can implement an artificial neural network (ANN), a convolutional neural network (CNN), or other suitable machine-learning models. The second strategy is to train a machine-learning model to map UDAR measurement data to an image of resistivity distribution in the region surrounding the new well being drilled as shown in Figure 8B. The training data set used for training the machine-learning model can be found from field measurements or synthesized using a physics-based simulator. The machine-learning model of Figure 8B can implement an artificial neural network (ANN), a convolutional neural network (CNN), or other suitable machine-learning models. The resistivity distribution can be processed to identify low-resistivity anomalies that represent the presence of multiple target wells. The third strategy is to train a machine-learning model to map UDAR measurement data to a parametric description of multiple target wells in the region surrounding the new well being drilled as shown in Figure 8C. The training data set used for training the machine-learning model can be found from field measurements or synthesized using a physics-based simulator. The machine-learning model of Figure 8C can implement an artificial neural network (ANN), a convolutional neural network (CNN), or other suitable machine-learning models.

The above solutions can be used either individually based on the most probable scenarios or used in combination to provide a more robust answer for the ranging operations described herein.

Figure 9 illustrates an example device 2500, with a processor 2502 and memory 2504 that can be configured to implement various embodiments of the methods and processes as discussed in the present application, including parts of the workflow(s) that employ UDAR measurements while drilling a new well to detect and locate multiple target wells in the region surrounding the new well. Memory 2504 can also host one or more databases and can include one or more forms of volatile data storage media such as random-access memory (RAM), and/or one or more forms of nonvolatile storage media (such as read-only memory (ROM), flash memory, and so forth).

Device 2500 is one example of a computing device or programmable device and is not intended to suggest any limitation as to scope of use or functionality of device 2500 and/or its possible architectures. For example, device 2500 can comprise one or more computing devices, programmable logic controllers (PLCs), etc.

Further, device 2500 should not be interpreted as having any dependency relating to one or a combination of components illustrated in device 2500. For example, device 2500 may include one or more computers, such as a laptop computer, a desktop computer, a mainframe computer, etc., or any combination or accumulation thereof.

Device 2500 can also include a bus 2508 configured to allow various components and devices, such as processors 2502, memory 2504, and local data storage 2510, among other components, to communicate with each other.

Bus 2508 can include one or more of any of several types of bus structures, including a memory bus or memory controller, a peripheral bus, an accelerated graphics port, and a processor or local bus using any of a variety of bus architectures. Bus 2508 can also include wired and/or wireless buses.

Local data storage 2510 can include fixed media (e.g., RAM, ROM, a fixed hard drive, etc.) as well as removable media (e.g., a flash memory drive, a removable hard drive, optical disks, magnetic disks, and so forth). One or more input/output (I/O) device(s) 2512 may also communicate via a user interface (UI) controller 2514, which may connect with I/O device(s) 2512 either directly or through bus 2508.

In one possible implementation, a network interface 2516 may communicate outside of device 2500 via a connected network or telemetry system (e.g., wired drill pipe). A media drive/interface 2518 can accept removable tangible media 2520, such as flash drives, optical disks, removable hard drives, software products, etc. In one possible implementation, logic, computing instructions, and/or software programs comprising elements of module 2506 may reside on removable media 2520 readable by media drive/interface 2518.

In one possible embodiment, input/output device(s) 2512 can allow a user (such as a human annotator) to enter commands and information into device 2500, and also allow information to be presented to the user and/or other components or devices. Examples of input device(s) 2512 include, for example, sensors, a keyboard, a cursor control device (e.g., a mouse), a microphone, a scanner, and any other input devices known in the art. Examples of output devices include a display device (e.g., a monitor or projector), speakers, a printer, a network card, and so on.

Various systems and processes of present disclosure may be described herein in the general context of software or program modules, or the techniques and modules may be implemented in pure computing hardware. Software generally includes routines, programs, objects, components, data structures, and so forth that perform particular tasks or implement particular abstract data types. An implementation of these modules and techniques may be stored on or transmitted across some form of tangible computer-readable media. Computer-readable media can be any available data storage medium or media that is tangible and can be accessed by a computing device. Computer readable media may thus comprise computer storage media. "Computer storage media" designates tangible media, and includes volatile and nonvolatile, removable, and non-removable tangible media implemented for storage of information such as computer readable instructions, data structures, program modules, or other data. Computer storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible medium which can be used to store the desired information, and which can be accessed by a computer. Some of the methods and processes described above can be performed by a processor. The term "processor" should not be construed to limit the embodiments disclosed herein to any particular device type or system. The processor may include a computer system. The computer system may also include a computer processor (e.g., a microprocessor, microcontroller, digital signal processor, general-purpose computer, special-purpose machine, virtual machine, software container, or appliance) for executing any of the methods and processes described above.

The computer system may further include a memory such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

Alternatively or additionally, the processor may include discrete electronic components coupled to a printed circuit board, integrated circuitry (e.g., Application Specific Integrated Circuits (ASIC)), and/or programmable logic devices (e.g., a Field Programmable Gate Arrays (FPGA)). Any of the methods and processes described above can be implemented using such logic devices.

Some of the methods and processes described above can be implemented as computer program logic for use with the computer processor. The computer program logic may be embodied in various forms, including a source code form or a computer executable form. Source code may include a series of computer program instructions in a variety of programming languages (e.g., an object code, an assembly language, or a high-level language such as C, C++, or JAVA). Such computer instructions can be stored in a non-transitory computer readable medium (e.g., memory) and executed by the computer processor. The computer instructions may be distributed in any form as a removable storage medium with accompanying printed or electronic documentation (e.g., shrink wrapped software), preloaded with a computer system (e.g., on system ROM or fixed disk), or distributed from a server or electronic bulletin board over a communication system (e.g., the Internet or World Wide Web).

There have been described and illustrated herein several embodiments of workflows that employs UDAR measurements obtained by a UDAR tool while drilling a new well to detect and locate multiple target wells in a region surrounding the new well. While particular UDAR measurements have been disclosed, it will be appreciated that other azimuthal resistivity measurements obtained by a downhole tool can be processed to detect and locate multiple target wells in the region surrounding the new well. Furthermore, while inversion-based processing or machine-learning processing can be used to detect and locate multiple target wells in the region surrounding the new well, other data processing techniques can be used as well. It will therefore be appreciated by those skilled in the art that yet other modifications could be made to the provided invention without deviating from its spirit and scope as claimed.

Although only a few example embodiments have been described in detail above, those skilled in the art will readily appreciate that many modifications are possible in the example embodiments without materially departing from this invention.

Accordingly, all such modifications are intended to be included within the scope of this disclosure as defined in the following claims. In the claims, means-plus-function clauses are intended to cover the structures described herein as performing the recited function and not only structural equivalents, but also equivalent structures.

## Claims

1. A method comprising:
deploying (303, 407) a downhole tool in a new well being drilled through a subterranean formation while drilling the new well and configuring the downhole tool to acquire ultradeep azimuthal resistivity (UDAR) measurements while drilling the new well; and
processing (305, 409) the ultradeep azimuthal resistivity measurements to detect and locate multiple target wells that extend through the subterranean formation in a region surrounding the new well, wherein the processing is preferably performed by a processor (2502); and
wherein the processing involves sequential parametric interpretation; and
wherein the sequential parametric interpretation is configured to extrapolate a detected target well deeper into the formation and combines the extrapolated part of the detected target well with a background formation model for input to a forward modeling process to generate simulated tool response data for the downhole tool, and process (305, 409) the simulated tool response data with measured response data of the downhole tool to detect the location and orientation of a next target well.

2. The method of claim 1, wherein:
the ultradeep azimuthal resistivity measurements are focused in directions perpendicular to a surface of the downhole tool and/or wherein
the ultradeep azimuthal resistivity tool is configured to detect resistivity changes at a radial depth of investigation relative to the new well of over 30.5 metres (100 feet) in magnitude.

3. The method of claim 1 or 2, further comprising:
using locations of the multiple target wells in geosteering operations that dynamically adjust the direction of drilling while drilling the new well.

4. The method of any one of the preceding claims, wherein:
the multiple target wells are cased or open hole wells that have conductivity contrast with surrounding formation.

5. The method of any one of the preceding claims, wherein:
the new well and the multiple target wells are spatially aligned in different relative angles, including all parallel or nearly parallel, partially parallel, or all in arbitrary directions.

6. The method of any one of the preceding claims, wherein:
the multiple target wells extend through the formation nearby the new well; or
the multiple target wells extend through the formation and come close to the new well simultaneously with one another, or
the multiple target wells extend through the formation and come close to the new well one after another.

7. The method of any one of the preceding claims, wherein:
the processing is configured to detect and locate the multiple target wells in cases where the number of target wells in the region surrounding the new well is unknown and/or wherein:
the processing is configured to detect and locate the multiple target wells in cases where the number of target wells in the region surrounding the new well is known and/or wherein:
the processing is configured to determine distance and orientation or bearing of the new well relative to each one of the multiple target wells; or
the processing is configured to determine distance and orientation or bearing of the new well relative to each one of the multiple target wells to the new well.

8. The method of any one of the preceding claims, wherein:
the processing involves an inversion process that generates synthesized tool response data from a model and refines the model based on evaluation of differences between the synthesized tool response data and measured tool response data.

9. The method of claim 8, wherein:
the inversion process is a pixel-based inversion modeling process where the number of target wells in the region surrounding the new well is unknown.

10. The method of claim 8, wherein:
the inversion process is a model-based inversion process where the number of target wells in the region surrounding the new well is known information.

11. The method of claim 10, wherein:
each target well is modeled by parameters such as positional coordinates of the central point of the target well, dip and azimuth angle of the target well, and conductivity (i.e., casing or fluid in the open hole) and diameter of the target well.

12. The method of any one of the preceding claims, wherein:
the processing employs a machine-learning model.

13. The method of claim 12, wherein:
the machine-learning model is a machine-learning proxy model trained to represent three-dimensional forward modeling of simulated tool response data from properties of a model that represents resistivity of the formation and multiple target wells in the region surrounding the new well; or
the machine-learning model is trained to map the ultradeep azimuthal resistivity measurements to an image of resistivity distribution in the region surrounding the new well being drilled; or
the machine-learning model is trained to map the ultradeep azimuthal resistivity measurements to parametric description of multiple target wells in the region surrounding the new well being drilled.

## Patentansprüche

1. Verfahren, umfassend:
Einbringen (303, 407) eines Bohrlochwerkzeugs in ein neues Bohrloch, das durch eine unterirdische Formation gebohrt wird, während des Bohrens des neuen Bohrlochs, und Konfigurieren des Bohrlochwerkzeugs zum Erfassen von ultratiefen azimutalen Widerstandsmessungen (UDAR-Messungen) während des Bohrens des neuen Bohrlochs; und
Verarbeiten (305, 409) der ultratiefen azimutalen Widerstandsmessungen, um mehrere Zielbohrlöcher zu detektieren und zu lokalisieren, die sich durch die unterirdische Formation in einer das neue Bohrloch umgebenden Region erstrecken, wobei das Verarbeiten vorzugsweise durch einen Prozessor (2502) durchgeführt wird; und
wobei das Verarbeiten eine sequenzielle parametrische Interpretation beinhaltet; und
wobei die sequentielle parametrische Interpretation konfiguriert ist, um ein erkanntes Zielbohrloch tiefer in die Formation zu extrapolieren, und den extrapolierten Teil des erkannten Zielbohrlochs mit einem Hintergrundformationsmodell kombiniert, um diesen als Eingabe in einen Vorwärtsmodellierungsprozess zu verwenden, mit dem simulierte Werkzeugantwortdaten für das Bohrlochwerkzeug erzeugt werden, und die simulierten Werkzeugantwortdaten mit gemessenen Antwortdaten des Bohrlochwerkzeugs zu verarbeiten (305, 409), um die Position und Ausrichtung eines nächsten Zielbohrlochs zu erkennen.

2. Verfahren nach Anspruch 1, wobei:
die ultratiefen azimutalen Widerstandsmessungen in Richtungen senkrecht zu einer Oberfläche des Bohrlochwerkzeugs fokussiert sind und/oder wobei
das ultratiefe azimutale Widerstandswerkzeug konfiguriert ist, um Widerstandsänderungen in einer radialen Untersuchungstiefe relativ zu dem neuen Bohrloch in einer Größenordnung von über 30,5 Metern (100 Fuß) zu erkennen.

3. Verfahren nach Anspruch 1 oder 2, ferner umfassend:
Verwenden von Positionen der mehreren Zielbohrlöcher bei Geosteering-Vorgängen, die die Bohrrichtung während des Bohrens des neuen Bohrlochs dynamisch anpassen.

4. Verfahren nach einem der vorstehenden Ansprüche, wobei:
die mehreren Zielbohrlöcher verrohrte oder unverrohrte Bohrlöcher sind, die einen Leitfähigkeitskontrast zur umgebenden Formation aufweisen.

5. Verfahren nach einem der vorstehenden Ansprüche, wobei:
das neue Bohrloch und die mehreren Zielbohrlöcher in verschiedenen relativen Winkeln räumlich ausgerichtet sind, einschließlich alle parallel oder nahezu parallel, teilweise parallel oder alle in beliebigen Richtungen.

6. Verfahren nach einem der vorstehenden Ansprüche, wobei:
die mehreren Zielbohrlöcher sich durch die Formation in der Nähe des neuen Bohrlochs erstrecken; oder
die mehreren Zielbohrlöcher sich durch die Formation erstrecken und sich gleichzeitig miteinander dem neuen Bohrloch nähern, oder
die mehreren Zielbohrlöcher sich durch die Formation erstrecken und sich nacheinander dem neuen Bohrloch nähern.

7. Verfahren nach einem der vorstehenden Ansprüche, wobei:
das Verarbeiten konfiguriert ist, um die mehreren Zielbohrlöcher in Fällen zu erkennen und zu lokalisieren, in denen die Anzahl der Zielbohrlöcher in der das neue Bohrloch umgebenden Region unbekannt ist, und/oder wobei:
das Verarbeiten konfiguriert ist, um die mehreren Zielbohrlöcher in Fällen zu erkennen und zu lokalisieren, in denen die Anzahl der Zielbohrlöcher in der das neue Bohrloch umgebenden Region bekannt ist, und/oder wobei:
das Verarbeiten konfiguriert ist, um Abstand und Ausrichtung oder Peilung des neuen Bohrlochs relativ zu jedem der mehreren Zielbohrlöcher zu bestimmen; oder
das Verarbeiten konfiguriert ist, um Abstand und Ausrichtung oder Peilung des neuen Bohrlochs relativ zu jedem der mehreren Zielbohrlöcher zu dem neuen Bohrloch zu bestimmen.

8. Verfahren nach einem der vorstehenden Ansprüche, wobei:
das Verarbeiten einen Inversionsprozess, der synthetisierte Werkzeugantwortdaten aus einem Modell erzeugt und das Modell basierend auf einer Auswertung von Differenzen zwischen den synthetisierten Werkzeugantwortdaten und gemessenen Werkzeugantwortdaten verfeinert, beinhaltet.

9. Verfahren nach Anspruch 8, wobei:
der Inversionsprozess ein pixelbasierter Inversionsmodellierungsprozess ist, wobei die Anzahl der Zielbohrlöcher in der das neue Bohrloch umgebenden Region unbekannt ist.

10. Verfahren nach Anspruch 8, wobei:
der Inversionsprozess ein modellbasierter Inversionsprozess ist, wobei die Anzahl der Zielbohrlöcher in der das neue Bohrloch umgebenden Region als Information bekannt ist.

11. Verfahren nach Anspruch 10, wobei:
jedes Zielbohrloch durch Parameter, wie Positionskoordinaten des Mittelpunkts des Zielbohrlochs, Neigungs- und Azimutwinkel des Zielbohrlochs und Leitfähigkeit (d. h. Verrohrung oder Fluid im offenen Bohrloch) und Durchmesser des Zielbohrlochs, modelliert wird.

12. Verfahren nach einem der vorstehenden Ansprüche, wobei:
das Verarbeiten ein Modell für maschinelles Lernen verwendet.

13. Verfahren nach Anspruch 12, wobei:
das Modell für maschinelles Lernen ein Maschinenlern-Proxymodell ist, das trainiert ist, eine dreidimensionale Vorwärtsmodellierung von simulierten Werkzeugantwortdaten aus Eigenschaften eines Modells zu repräsentieren, das den spezifischen Widerstand der Formation und mehrerer Zielbohrlöcher in der das neue Bohrloch umgebenden Region darstellt; oder
das Modell für maschinelles Lernen darauf trainiert ist, die ultratiefen azimutalen Widerstandsmessungen auf ein Bild der Widerstandsverteilung in der Region abzubilden, die das neue Bohrloch, das gebohrt wird, umgibt; oder
das Modell für maschinelles Lernen darauf trainiert ist, die ultratiefen azimutalen Widerstandsmessungen auf eine parametrische Beschreibung mehrerer Zielbohrlöcher in der Region abzubilden, die das neue Bohrloch, das gebohrt wird, umgibt.

## Revendications

1. Procédé comprenant :
le déploiement (303, 407) d'un outil de fond de trou dans un nouveau puits en cours de forage à travers une formation souterraine pendant le forage du nouveau puits et la configuration de l'outil de fond de trou pour acquérir des mesures de résistivité azimutale à très grande profondeur (UDAR) pendant le forage du nouveau puits ; et
le traitement (305, 409) des mesures de résistivité azimutale à très grande profondeur pour détecter et localiser de multiples puits cibles qui s'étendent à travers la formation souterraine dans une région entourant le nouveau puits, dans lequel le traitement est de préférence effectué par un processeur (2502) ; et
dans lequel le traitement implique une interprétation paramétrique séquentielle ; et
dans lequel l'interprétation paramétrique séquentielle est configurée pour extrapoler un puits cible détecté plus profondément dans la formation et combine la partie extrapolée du puits cible détecté avec un modèle de formation de fond pour une entrée dans un processus de modélisation directe afin de générer des données de réponse d'outil simulées pour l'outil de fond de trou, et le traitement (305, 409) des données de réponse d'outil simulées avec des données de réponse mesurées de l'outil de fond de trou pour détecter l'emplacement et l'orientation d'un puits cible suivant.

2. Procédé selon la revendication 1, dans lequel :
les mesures de résistivité azimutale à très grande profondeur sont focalisées dans des directions perpendiculaires à une surface de l'outil de fond de trou et/ou dans lequel
l'outil de résistivité azimutale à très grande profondeur est configuré pour détecter des variations de résistivité à une profondeur d'investigation radiale par rapport au nouveau puits d'une grandeur de plus de 30,5 mètres (100 pieds).

3. Procédé selon la revendication 1 ou 2, comprenant en outre :
l'utilisation d'emplacements des multiples puits cibles dans des opérations de géonavigation qui ajustent dynamiquement la direction de forage pendant le forage du nouveau puits.

4. Procédé selon l'une quelconque des revendications précédentes, dans lequel :
les multiples puits cibles sont des puits tubés ou en découvert qui présentent un contraste de conductivité avec la formation environnante.

5. Procédé selon l'une quelconque des revendications précédentes, dans lequel :
le nouveau puits et les multiples puits cibles sont alignés spatialement selon différents angles relatifs, y compris tous parallèles ou presque parallèles, partiellement parallèles, ou tous dans des directions arbitraires.

6. Procédé selon l'une quelconque des revendications précédentes, dans lequel :
les multiples puits cibles s'étendent à travers la formation à proximité du nouveau puits ; ou
les multiples puits cibles s'étendent à travers la formation et se rapprochent du nouveau puits simultanément les uns avec les autres, ou
les multiples puits cibles s'étendent à travers la formation et se rapprochent du nouveau puits les uns après les autres.

7. Procédé selon l'une quelconque des revendications précédentes, dans lequel :
le traitement est configuré pour détecter et localiser les multiples puits cibles dans les cas où le nombre de puits cibles dans la région entourant le nouveau puits est inconnu et/ou dans lequel :
le traitement est configuré pour détecter et localiser les multiples puits cibles dans les cas où le nombre de puits cibles dans la région entourant le nouveau puits est connu et/ou dans lequel :
le traitement est configuré pour déterminer la distance et l'orientation ou le relèvement du nouveau puits par rapport à chacun des multiples puits cibles ; ou
le traitement est configuré pour déterminer la distance et l'orientation ou le relèvement du nouveau puits par rapport à chacun des multiples puits cibles vers le nouveau puits.

8. Procédé selon l'une quelconque des revendications précédentes, dans lequel :
le traitement implique un processus d'inversion qui génère des données de réponse d'outil synthétisées à partir d'un modèle et affine le modèle sur la base de l'évaluation des différences entre les données de réponse d'outil synthétisées et les données de réponse d'outil mesurées.

9. Procédé selon la revendication 8, dans lequel :
le procédé d'inversion est un procédé de modélisation d'inversion basé sur les pixels dans lequel le nombre de puits cibles dans la région entourant le nouveau puits est inconnu.

10. Procédé selon la revendication 8, dans lequel :
le procédé d'inversion est un procédé d'inversion basé sur un modèle où le nombre de puits cibles dans la région entourant le nouveau puits est une information connue.

11. Procédé selon la revendication 10, dans lequel :
chaque puits cible est modélisé par des paramètres tels que les coordonnées de position du point central du puits cible, l'angle de pendage et d'azimut du puits cible, et la conductivité (c'est-à-dire le tubage ou le fluide dans le trou ouvert) et le diamètre du puits cible.

12. Procédé selon l'une quelconque des revendications précédentes, dans lequel :
le traitement utilise un modèle d'apprentissage automatique.

13. Procédé selon la revendication 12, dans lequel :
le modèle d'apprentissage automatique est un modèle proxy d'apprentissage automatique entraîné pour représenter la modélisation directe tridimensionnelle de données de réponse d'outil simulées à partir de propriétés d'un modèle qui représente la résistivité de la formation et de multiples puits cibles dans la région entourant le nouveau puits ; ou
le modèle d'apprentissage automatique est entraîné pour associer les mesures de résistivité azimutale à très grande profondeur à une image de la distribution de résistivité dans la région entourant le nouveau puits en cours de forage ; ou
le modèle d'apprentissage automatique est entraîné pour mettre en correspondance les mesures de résistivité azimutale à très grande profondeur avec une description paramétrique de plusieurs puits cibles dans la région entourant le nouveau puits en cours de forage.
